# EUROPEAN PATENT APPLICATION

(11) **EP 3 964 837 A1**
(43) Date of publication of application: **09.03.2022**
(21) Application number: 20194293.5
(22) Date of filing: 03.09.2020
(51) Int. Cl.: G01N 35/00

(54) **SAMPLE CONTAINER TRANSPORT SYSTEM**

(71) Applicant: F. Hoffmann-La Roche AG, 4070 Basel (CH); Roche Diagnostics GmbH, 68305 Mannheim (DE)
(72) Inventor: LEONTJEVS, Vladimirs, 70806 Kornwestheim (DE); SCHESNY, Andreas, 70806 Kornwestheim (DE)
(74) Representative: Ko, Benjamin Hyensuk

(57) **Abstract**

A sample container transport system (1) for moving sample containers in an in-vitro diagnostic ("IVD") laboratory system is proposed, the sample container transport system (1) comprising
- a gripping apparatus (3) for gripping sample containers (5), and
- a robotic movement apparatus (2) for moving the gripping apparatus (3) in multiple directions,
characterized in that the sample container transport system (1) comprises
- a multidimensional-force sensor (4) that is designed for detecting a multidimensional-force signal indicative of forces in multiple directions acting on a sample container (5) gripped by the gripping apparatus (3).

Further, a method for using the sample container transport system (1) is proposed.

## Description

### TECHNICAL FIELD

The invention relates to sample container transport systems for moving sample containers in an in-vitro diagnostic ("IVD") laboratory system, and methods for using such sample container transport systems.

### BACKGROUND

A biological sample to be analyzed in an in-vitro diagnostic ("IVD") laboratory is typically contained in a sample container, such as tubes, which can be handled in the IVD laboratory by using transport systems that grip and move the sample container. Such movement is a delicate matter. For instance, when the sample container is not closed, e.g. an open tube without a cap, spillage of the content in the sample containers can occur during the movement, which can lead to contamination and thus to critical problems within the IVD laboratory. In prior art, it is proposed to use volume and/or weight detection for spillage detection, but such detection tends to be slow and only indicate a spillage that already has occurred.

### SUMMARY

It is a purpose of this invention to provide improved sample container transport systems and methods for using such sample container transport systems.

For this purpose, sample container transport systems and methods according to the independent claims are proposed and specific embodiments of the invention are set out in the dependent claims.

A sample container transport system for moving sample containers in an IVD laboratory system is proposed, the sample container transport system comprising
- a gripping apparatus for gripping sample containers, and
- a robotic movement apparatus for moving the gripping apparatus in multiple directions, and
- a multidimensional-force sensor that is designed for detecting a multidimensional-force signal indicative of forces in multiple directions acting on a sample container gripped by the gripping apparatus.

According to some embodiments, the multidimensional-force sensor is designed for detecting a multidimensional-force signal indicative of forces in multiple directions comprising three translation and three rotation dimensions.

According to some embodiments, the multidimensional-force sensor is arranged at an intersection of the robotic movement apparatus and the gripping apparatus.

According to some embodiments, the container processing system comprises
- a signal-processing unit configured for processing the multidimensional-force signal, wherein the signal-processing unit is configured for determining if a detected multidimensional-force signal satisfies a pre-defined condition.

According to some embodiments, the sample container transport system comprises
- an artificial intelligence unit for determining if the detected multidimensional-force signal satisfies a pre-defined condition.

According to some embodiments, the sample container transport system comprises
- a position sensor that is designed for detecting a position signal that is indicative of a position of the gripping apparatus and/or of a sample container gripped by the gripping apparatus.

Further proposed is a method for using a proposed sample container transport system for moving a sample container, the method comprising the following steps:
- moving the sample container
   ∘ by gripping the sample container using the gripping apparatus and
   ∘ by moving the gripping apparatus ;
- detecting a multidimensional-force signal indicative of forces in multiple directions acting on the sample container while being moved; and
- determining if the detected multidimensional-force signal satisfies a pre-defined condition.

According to some embodiments, the pre-defined condition comprises that
- a one-dimensional parameter of the multidimensional-force signal exceeds a pre-defined threshold.

According to some embodiments, the one-dimensional parameter is a combination of force signals in two or more directions.

According to some embodiments, the step of
- determining if the detected multidimensional-force signal satisfies a pre-defined condition
comprises using an artificial intelligence.

According to some embodiments,
- the multidimensional-force signal comprises a position signal indicative of a position of the gripping apparatus and/or of a sample container gripped by the gripping apparatus at which the multidimensional force signal was detected;
- the pre-defined condition comprises a position condition;
- the step of
   ∘ detecting a multidimensional-force signal indicative of forces in multiple directions acting on the sample container while being moved
      comprises
   ∘ detecting the position signal; and
- the step of
   ∘ determining if the detected multidimensional-force signal satisfies pre-defined condition
      comprises
   ∘ determining if the detected position signal satisfies the position condition.

According to some embodiments, the pre-defined condition depends on a translation force in a non-vertical direction, e.g. a force in a horizontal direction, and/or on a rotation force.

According to some embodiments, the method further comprises the step of
- performing a pre-defined action if it is determined that the detected force signal satisfies the pre-defined condition.

According to some embodiments, the method comprises the steps of:
- moving a reference sample container
   ∘ by gripping the reference sample container using the gripping apparatus and
   ∘ by moving the gripping apparatus ;
- detecting and recording a profile of a multidimensional force signal indicative of forces in multiple directions that act on the reference sample container while being moved and/or parameters derived therefrom; and
- defining a condition for a detected multidimensional-force signal using the recorded profile, the condition thereby becoming a pre-defined condition.

According to some embodiments,
- the step of
   ∘ detecting and recording a profile of a multidimensional force signal indicative of forces in multiple directions that act on the reference sample container while being moved;
      comprises
   ∘ detecting and recording the position signal; and
- the step of
   ∘ defining a condition for a detected multidimensional-force signal using the recorded profile, the condition thereby becoming a pre-defined condition
      comprises
   ∘ defining a position condition of the pre-defined condition.

### BRIEF DESCRIPTION OF THE DRAWINGS

Specific embodiments of the invention are described in the following with reference to the drawings, which are for illustrating specific embodiments of the inventions and not for limiting the same. In the drawings,
- Fig. 1: shows a sample container transport system comprising a multidimensional-force sensor,
- Fig. 2: shows the sample container transport system of Fig. 1 from a different perspective,
- Fig. 3: shows another sample container transport system with a sample container in a first position,
- Fig. 4: shows the sample container transport system of Fig. 3 with the sample container in a second position,
- Fig. 5: shows a flowchart of a method for using a sample container transport system comprising a multidimensional-force sensor,
- Fig. 6: shows a flowchart of a further method for using a sample container transport system comprising a multidimensional-force sensor,
- Fig. 7: shows a flowchart of a method for spillage detection/prevention,
- Fig. 8: shows a flowchart of a method for rack detection,
- Fig. 9: shows a flowchart of a method for collision detection,
- Fig. 10: shows a flowchart of a method for sample container gripping confirmation, and
- Fig. 11: shows a diagram of multiple profiles of forces.

### DESCRIPTION OF SPECIFIC EMBODIMENTS

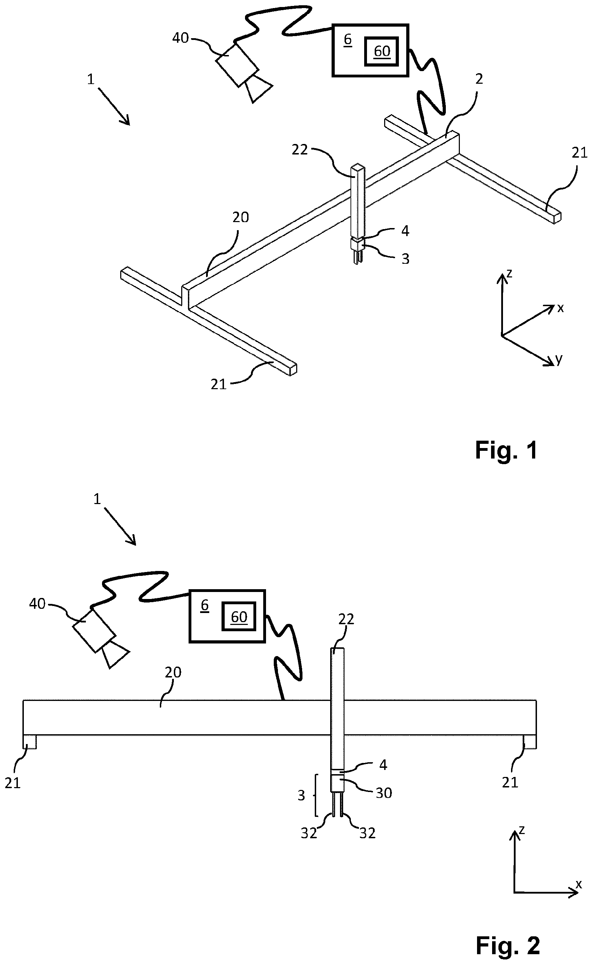

Fig. 1 illustrates an example of a proposed sample container transport system 1 for moving sample containers 5, e.g. tubes, in an in-vitro diagnostic ("IVD") laboratory system. The sample container transport system 1 comprises a gripping apparatus 3 designed for gripping sample containers 5 and a robotic movement apparatus 2 designed for moving the gripping apparatus 3 in multiple, i.e. two or more, directions. This can allow for moving a gripped sample container 5. According to some specific embodiments, one of the multiple directions in which the robotic movement apparatus 2 can move the gripping apparatus 3 is the vertical direction that is indicated by the z-axis in the tripod depicted in Fig. 1.

According to some embodiments, the robotic movement apparatus 2 is designed for moving the gripping apparatus 3 in multiple directions in three translation dimensions, e.g. a translation in every direction. In the example of Fig. 1, the robotic movement apparatus 2 is realized as a Cartesian robot, wherein translation movement is composed of movement along multiple axes that are orthogonally to each other, in the illustrated case the x-axis, the *y*-axis, and the z-axis as indicated by the depicted tripod. The illustrated robotic movement apparatus 2 comprises
- a rail 20 for movement in the *x*-direction;
- a rail 21 for movement in the *y*-direction; and
- a moveable beam 22 for movement in the z-direction.
Other combinations of rails and beams are conceivable as well.

According to some embodiments, the robotic movement apparatus 2 is designed for moving the gripping apparatus 3 in multiple directions in at least one rotation and three translation dimensions. The at least one rotation direction can e.g. be a rotation around the z-axis of Fig. 1, which could allow for a rotation of a gripped tube around its main axis, e.g. for moving a barcode attached to the tube to a specific side. According to some specific embodiments, the robotic movement apparatus 2 is designed for moving the gripping apparatus 3 in multiple directions in two or more rotation dimensions, e.g. in three rotation dimensions.

The sample container transport system 1 comprises a multidimensional-force sensor 4 that is designed for detecting a multidimensional-force signal indicative of forces in multiple (i.e. two or more) directions acting on a sample container 5 gripped by the gripping apparatus 3. Thereby, it can be possible to detect, evaluate, and/or quantify forces acting on the gripped sample container 5. According to some specific embodiments, the multiple directions in which the multidimensional-force sensor is designed for detecting forces acting on a sample container 5 comprise the vertical direction.

According to some embodiments, the multidimensional-force sensor 4 is designed for detecting a multidimensional-force signal indicative of forces in multiple directions comprising at least three translation dimensions. In other words, the multidimensional-force signal is indicative of translation forces with three degrees of freedom, e.g. all translation forces.

According to some embodiments, the multidimensional-force sensor 4 is designed for detecting a multidimensional-force signal indicative of forces in multiple directions comprising three translation and three rotation dimensions, e.g. all translation forces and all rotation forces. Such a sensor is sometimes also called a six-axis force torque sensor. A commercially available six-axis force torque sensor is for example the sensor "Mini40" of the company "ATI Industrial Automation" as available of August 15^{th}, 2020. Six-axis force torque sensors can e.g. be designed for measuring the translation forces along three defined and mutually orthogonal axes and the rotation forces (torques) around each of the same three axes.

**Fig. 2** illustrates the sample container transport system 1 of Fig. 1 from a side facing into the *y*-direction. In this example, the gripping apparatus 3 comprises a gripping body 30 and a gripping element 32, wherein the gripping apparatus 3 is designed so that the gripping element 32 is in direct contact with the sample container 5 if the sample container 5 is gripped by the gripping apparatus 3. The gripping element 32 can e.g. comprise a pair of moveable gripper fingers as shown in Fig. 2, a contractible and extendable ring (not shown), and/or a soft robotic gripping structure (not shown). In the depicted example, the multidimensional-force sensor 4 is operatively coupled to the gripping element 32 in a force-transmitting manner such that a force acting on a sample container 5 gripped by the gripping element 32 acts on the multidimensional-force sensor 4. The gripping body 30 can comprise a motor and/or a mechanic for opening/closing the grip by the gripping element 32. A commercially available gripper body is for example the double jaw gripper "GEP2010IO-05-A-05" of the company "Zimmer GMBH" as available of August 15^{th}, 2020.

In the example of Fig. 2, the multidimensional-force sensor 4 is arranged at an intersection of the robotic movement apparatus 2 and the gripping apparatus 3, in the depicted case between the z-axis beam 22 and the gripping body 30. Alternatively, the multidimensional-force sensor 4 could be comprised in the gripping apparatus 3, e.g. between the gripping body 30 and a gripping element 32 and/or as part of a soft robotic gripping structure. In another alternative, the multidimensional-force sensor 4 could be comprised in the robotic movement apparatus 2, e.g. at an intersection between a z-axis beam 22 and an x-axis rail 20.

According to some embodiments, the sample container transport system 1 comprises a position sensor 40 that is designed for detecting a position signal that is indicative of a position of the gripping apparatus 3 and/or of a sample container 5 gripped by the gripping apparatus 3. This can allow determining the position of a gripped sample container 5, e.g. its x/y/z-coordinates. In an example, the position signal is raw data recorded by the position sensor 40 and the sample container transport system 1 comprises a signal-processing unit 6 that is configured for calculating a position of the sample container 5 using this raw data.

As shown in Fig. 1 and Fig. 2, the position sensor 40 can comprise a camera and can e.g. use image recognition and/or time-of-flight calculations for determining the position of a sample container 5, which can e.g. comprise using an artificial intelligence.

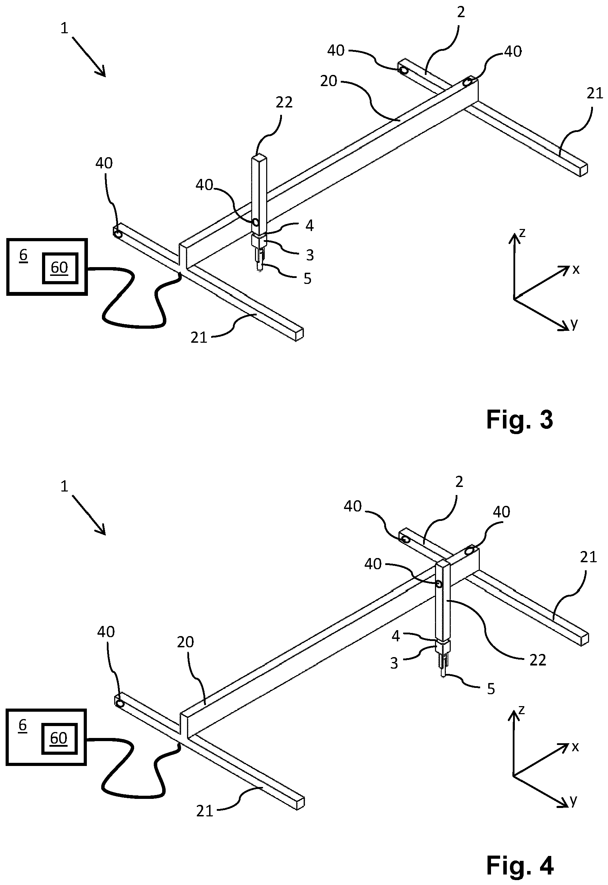

A further embodiment is shown in **Fig. 3** and **Fig. 4****,** wherein components of the position sensor 40 are comprised in the drive mechanisms of the robotic movement apparatus 2, which can allow for determining the position of the gripping apparatus 3 and/or of a sample container 5 gripped by the gripping apparatus 3 based on the movement caused by the respective drive mechanisms. In an example, an encoder of a drive mechanism can use a method of discrete driving steps, wherein each steps effectively amounts to a movement of a fixed length (e.g. a few micrometers) in a certain direction, which allows for determining the current position by using a known position and the driving steps used since having been at this known position. The gripped sample container 5 is in a first position in Fig. 3 and in a second position in Fig. 4. In this example the two positions have a different x-coordinate and a different z-coordinate and this difference can be determined by the number of driving steps in the x-direction and the number of driving steps in the z-direction during the movement from the first position to the second position.

According to some embodiments, the position sensor 40 comprises one or more RFID sensors, and the sample container transport system 1 is configured for detecting a position signal indicative of a position of an RFID chip attached to a sample container 5 and thereby indicative of the position of the sample container 5, e.g. by using two and more RFID sensors that are arranged at different positions and analyzing the RFID signal detected by the two or more RFID sensors.

As shown in Figs. 1-4, the sample container transport system 1 can comprise a signal-processing unit 6 configured for processing the multidimensional-force signal. In case the sample container transport system 1 comprises a position sensor 40, the signal-processing unit 6 can further be configured for processing the position signal. Processing can e.g. comprise smoothing, filtering, recording, logging, comparing, analyzing, and/or detecting outliers. The signal-processing unit 6 can be configured for detecting, evaluating, and/or quantifying forces acting on the gripped sample container 5 by using the multidimensional-force signal, and - if applicable - for determining a position of a sample container 5 by using the position signal.

The signal-processing unit 6 can be configured for determining if a detected multidimensional-force signal satisfies a (i.e. at least one) pre-defined condition. According to some specific embodiments, the sample container transport system 1 is designed for moving a sample container 5 and determining if the multidimensional-force signal satisfies a pre-defined condition simultaneously (e.g. with a delay of less than 1 millisecond). This can allow for reacting to events of which the multidimensional-force signal is indicative in real-time.

The signal-processing unit 6 can comprise a processor, a volatile memory, a nonvolatile memory, and a bus structure connecting these components.

According to some embodiments, the sample container transport system 1 comprises an artificial intelligence unit 60. The artificial intelligence unit 60 can be configured, e.g. trained, for determining if the detected multidimensional-force signal satisfies a pre-defined condition. As shown in Figs. 1-4, the artificial intelligence unit 60 can be comprised in the signal-processing unit 6. The artificial intelligence unit 60 can allow for a fast and/or precise determination if a pre-defined condition is satisfied, thereby possibly improving the reaction time and/or precision of the sample container transport system 1.

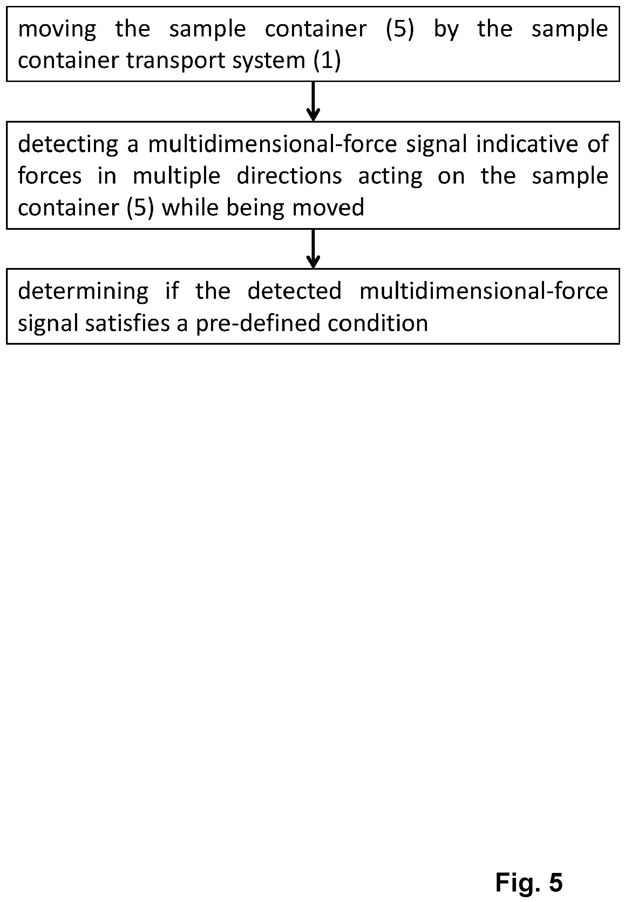

**Fig. 5** shows a flowchart of a proposed method for using a sample container transport system 1, e.g. one of the sample container transport system 1 proposed herein, for moving a sample container 5. The method comprises the following steps:
- moving the sample container 5 by the sample container transport system 1 (e.g. by gripping the sample container 5 using a gripping apparatus 3 and by moving the gripping apparatus 3, e.g. by a robotic movement apparatus 2);
- detecting (e.g. in real-time) a multidimensional-force signal (e.g. by using a multidimensional-force sensor 4) indicative of forces in multiple directions acting on the sample container 5 while being moved; and
- determining (e.g. in real-time) if the detected multidimensional-force signal satisfies a (i.e. at least one) pre-defined condition.
Depending on how the pre-defined condition is defined, this method can e.g. allow for problem detection/prevention, spillage detection/ prevention, collision detection, rack detection, sample container gripping confirmation, and/or sample container releasing confirmation.

According to some embodiments, the method comprises detecting a multidimensional-force signal indicative of at least one rotation force. According to some specific embodiments, the method comprises detecting a multidimensional-force signal indicative of rotation forces in three rotation dimensions, e.g. all possible rotations. Using rotation forces, which are also referred to as torques, for detecting problems can have the benefit that certain events can be detected faster and/or more precisely by using rotation forces than by solely using translation forces.

According to some embodiments, the pre-defined condition comprises that a (i.e. at least) one-dimensional parameter of the multidimensional-force signal exceeds a pre-defined threshold. The one-dimensional parameter can be a parameter derived from the multidimensional-force signal.

According to some specific embodiments, the one-dimensional parameter is a force signal in one direction, e.g. a translation direction or a rotation direction, and the pre-defined condition comprises this force signal being above a certain value. Such a value can be pre-determined by experimentation and be indicative of a shock that e.g. can be caused by a collision and/or cause a spillage.

According to some specific embodiments, the one-dimensional parameter is a combination of force signals in two or more directions, e.g. where
- *fₓ* denotes the translation force in a *x*-Axis,
- *f_{y}* denotes the translation force in a *y*-Axis,
- *f_{z}* denotes the translation force in a z-Axis,
- *tₓ* denotes the rotation force (torque) around the *x*-Axis,
- *t_{y}* denotes the rotation force (torque) around the *y*-Axis, and
- *t_{z}* denotes the rotation force (torque) around the *z*-Axis,
the one-dimensional parameter can be a function *f* = *f (fₓ*, *f_{y}, f_{z}*, *tₓ*, *t_{y}*, *t_{z})*. Such a function can e.g. be used for calculating the force in any translation direction and/or any rotation direction based on six basic forces. In a specific example, the function is *f* = *fₓ* + *f_{y}* + *f_{z}* + *tₓ* + *t_{y}* + *t_{z}* and the pre-defined condition that this function is above a certain value (in other words: that the sum of the basic forces is too high), which can be indicative of any of the forces in any translation direction and/or any rotation direction being too high. Another possible example of a pre-defined condition is that the function *f* = *max (fₓ, f_{y}, f_{z}, tₓ, t_{y}, t_{z})* is above a certain value.

According to some embodiments, the one-dimensional parameter is the variance of a force in one direction or a function (e.g. sum, average, etc.) of the variances of forces in different directions. An unusually high variance can be indicative of a rough transport and thus of a spillage and/or other problems during transport.

According to some embodiments, the pre-defined condition comprises that the detected multidimensional-force signal profile deviates from a (i.e. at least one) multidimensional-force signal pattern. Such a deviation can e.g. be detected using an artificial intelligence. According to an example, the pre-defined multidimensional-force signal pattern is derived from recordings of multidimensional-force signals profiles of moving sample containers 5, e.g. a spillage-free moving of a sample container 5 using the same sample container transport system 1 and/or a sample container transport system 1 identical or similar in construction. In practice, multiple (i.e. two or more) patterns can be stored and the detected multidimensional-force signal profile can be compared to each of these patterns, e.g. to
- a first pattern for a first movement from A to B and a second pattern for a second movement from A to C, and/or
- a third pattern for moving a sample container of a first type and a fourth pattern for moving a sample container of a second type.

According to some embodiments, the pre-defined condition does not solely depend on the multidimensional-force signal. Instead, the pre-defined condition can in addition depend on other information, such as e.g. information concerning the position of the sample container 5, its prior movement, its intended movement, its weight, its type, and/or an assumed location of racks and/or other sample containers.

According to some embodiments, the step of determining if the detected multidimensional-force signal satisfies a pre-defined condition comprises using an artificial intelligence. The artificial intelligence can e.g. based on machine learning and/or neural networks. The artificial intelligence can be implemented in an artificial intelligence unit 60 of the sample container transport system 1. According to some specific embodiments, the training of the artificial intelligence comprises using of recordings of multidimensional-force signal profiles of moving one or more sample containers 5, e.g. reference data and/or real world data. The artificial intelligence can e.g. be trained using a variety of patterns, some of which are recordings where problems (e.g. spillage) have occurred and some of which are recordings where no problems have occurred. The quality of the problem detection using an artificial intelligence can depend on the training data that is used for training the artificial intelligence. The artificial intelligence can be re-trained, e.g. when more data is available, thereby possibly re-defining the conditions. For example, the artificial intelligence can be retrained after a condition has been satisfied although no problem has occurred, and/or after a problem has occurred although no condition has been satisfied. The re-training can lead to modifying of an existing condition or to defining a new condition, which can then be used as a pre-defined condition for the future. The artificial intelligence can be subject to constant re-training, e.g. in a case of constant feedback to the artificial intelligence if problems have occurred or not.

A pre-defined condition can comprise one or more (sub-)conditions. In some examples, the conditions do not only depend on force values, but also on other factors such as e.g. the position of a sample container 5.

According to some embodiments,
- the multidimensional-force signal comprises a position signal indicative of a position (in Figs. 1-4 e.g. the x/y/z-coordinates) of the gripping apparatus 3 and/or of a sample container 5 gripped by the gripping apparatus 3 at which the multidimensional force signal was detected;
- the pre-defined condition comprises a position condition;
- the step of
   ∘ detecting a multidimensional-force signal indicative of forces in multiple directions acting on the sample container 5 while being moved
      comprises
   ∘ detecting the position signal (e.g. simultaneously to the multidimensional-force signal); and
- the step of
   ∘ determining if the detected multidimensional-force signal satisfies pre-defined condition
      comprises
   ∘ determining if the detected position signal satisfies the position condition.

In the example of Fig. 3 and Fig. 4, the pre-defined condition can e.g. be that at least one of the following sub-conditions are satisfied:
- sub-condition 1: *fₓ* (the force in x-direction) is larger than *3 Newton;* and
- sub-condition 2: *fₓ* is larger than *2 Newton* and the sample container's position is not at in a pre-defined area,
wherein the position of the sample container 5 in Fig. 3 is not in that pre-defined area and the position of the sample container 5 in Fig. 4 is in that pre-defined area. If at the position of Fig. 3 a value of *fₓ* = *2.5 Newton* is measured, the sub-condition 1 is not satisfied and the sub-condition 2 is satisfied and thus the pre-defined condition is satisfied. However, if the same value of *fₓ* = *2.5 Newton* is measured at the position of Fig. 4, neither the sub-condition 1 nor the sub-condition 2 are satisfied and therefore the pre-defined condition is not satisfied. Defining different conditions for different positions can e.g. be useful if at certain positions possible risks from force-events are higher resp. lower and/or if certain force-events are expected at certain positions, e.g. at a position where tubes are placed into racks.

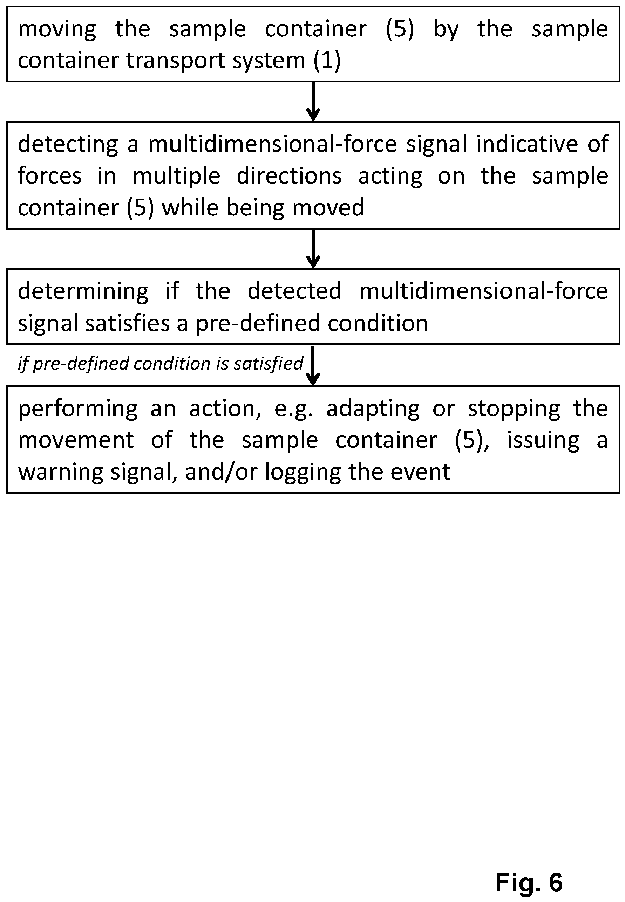

As shown in the flowchart of **Fig. 6****,** the method can comprise the step of performing an action if it is determined that the detected force signal satisfies the pre-defined condition. Deciding if an action is to be performed and/or which action is to be performed can depend on details of the multidimensional-force signal and/or other factors. In an example, if - after the satisfaction of the pre-defined condition - the vertical force is lower as compared to before the movement, the movement is stopped and a warning signal is given (e.g. to indicate that a possible spillage event occurred); while if the vertical force remains constant, the movement is only slowed (e.g. so as to stabilize the force signal).

According to some embodiments, the sample container transport system 1 is configured for choosing which action to perform in case of a satisfaction of a pre-defined condition. The choice can depend on the multidimensional-force signal and/or other information, such as e.g. information concerning the position of the sample container 5, its prior movement, its intended movement, its weight, its type, and/or an assumed location of racks and/or other sample containers.

According to some embodiments, the action is pre-defined and e.g. defined together with the pre-defined condition.

According to some embodiments, the (e.g. pre-defined) action comprises logging the event, e.g. by writing data related to the satisfaction of the pre-defined condition in a log file. The logged data can e.g. comprise
- a date and a time on which the condition was satisfied,
- a position at which the condition was satisfied,
- a start position of the movement during which the condition was satisfied,
- a target position of the movement during which the condition was satisfied,
- the multidimensional-force signal and/or data derived therefrom, e.g. detected before, during, and/or after the condition was satisfied.
The logged data can e.g. be used for documentation, (re-)defining conditions, (re-)defining actions, and/or training an artificial intelligence.

According to some specific embodiments, the logged data is used for future routing of the movement of sample containers. For example, the routing can be adjusted as to slow down in or to avoid certain areas in which pre-defined conditions indicating possible spillage events are satisfied disproportionally often.

The logged data can e.g. be used for (re-)designing sample container transport systems, e.g. by changing the design of areas in which pre-defined conditions indicating possible spillage events are satisfied disproportionally often.

According to some specific embodiments, the logged data are used for defining new pre-defined conditions for the proposed method. For example, if evaluating the logged data yields that a pre-defined condition that was designed for indicating possible spillage events is satisfied disproportionally often but that, in many of these cases, no actual spillage event occurred, the pre-defined condition can be adjusted to reduce false alerts. In an example, a pre-defined condition is that *max(tₓ, t_{y})* is larger than *2 Newton,* and after one thousand samples have been moved, it is found that this condition was satisfied ten times but that only in one of these ten cases an actual spillage occurred. After evaluating the log, it is found that in the nine cases in which no spillage occurred *max(tₓ, t_{y})* remained lower than *2.2 Newton,* and that in the one case in which a spillage occurred *max(tₓ, t_{y})* exceeded *2.5 Newton.* In light of this finding, the pre-defined condition can e.g. be adjusted so that it is only satisfied if *max(tₓ, t_{y})* is larger than *2.2 Newton,* thereby reducing the likelihood that a false spillage warning is issued.

According to some embodiments, the (e.g. pre-defined) action comprises issuing a warning signal, e.g. an acoustic and/or visual warning signal. The warning signal can allow drawing the attention of a user to a possible problem during movement of the sample container 5.

According to some embodiments, the (e.g. pre-defined) action comprises adjusting the moving of the sample container 5. According to some specific embodiments, adjusting the moving of the sample container 5 comprises slowing the moving of the sample container 5, e.g. slowing as compared to the speed at the time when the pre-defined condition was satisfied and/or as compared to the speed originally planned by the sample container transport system 1. Adjusting the moving can comprise adjusting the speed pattern of the moving, e.g. from a first speed pattern that was originally planned before determining that the detected force signal satisfies the pre-defined condition to a second speed pattern after determining that the detected force signal satisfies the pre-defined condition. Slowing a movement of a sample container 5 can allow for reducing the risk of spillage.

According to some specific embodiments, adjusting the moving comprises adjusting the movement path, e.g. from a first path that was originally planned before determining that the detected force signal satisfies the pre-defined condition to a second path after determining that the detected force signal satisfies the pre-defined condition, e.g. where the first path is shorter than the second path but cleaning is simpler in the area of the second path than compared to in the area of the first path. Adjusting the moving can comprise adjusting the movement path to a smoother path, e.g. a path with less non-differentiable points along the path; a smoother path can allow for reducing the likelihood of spillage. Adjusting the moving can comprise using an artificial intelligence for determining in which manner the moving is adjusted.

According to some embodiments, the (e.g. pre-defined) action comprises stopping the moving of the sample container 5.

According to some embodiments, the (e.g. pre-defined) action comprises checking for contamination in an area in which the sample container 5 was moved.

According to some embodiments, the (e.g. pre-defined) action comprises cleaning an area in which the sample container 5 was moved.

According to some embodiments, the (e.g. pre-defined) action comprises releasing the sample container 5 from the gripping apparatus 3, e.g. by opening the gripping element 32.

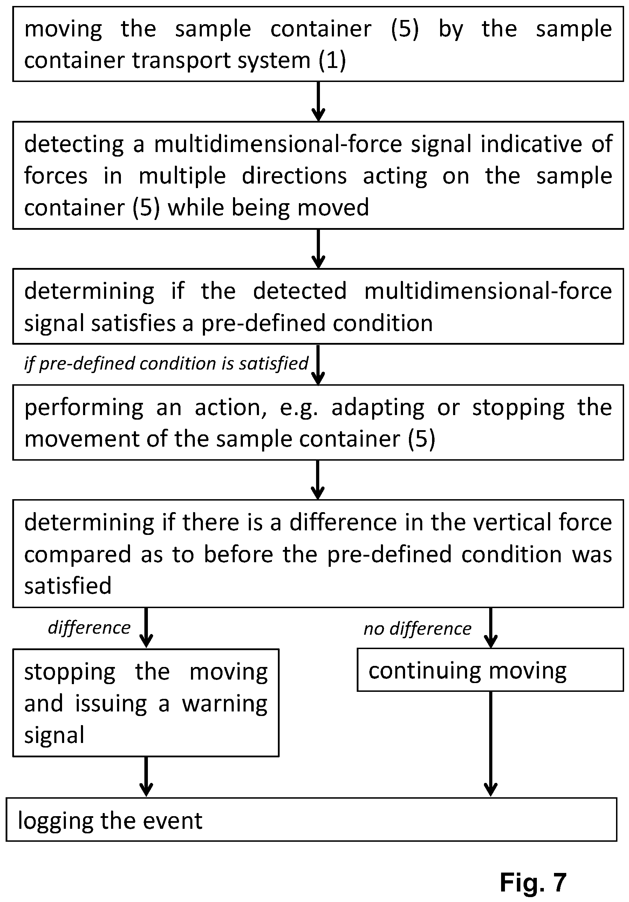

**Fig. 7** shows a flowchart of a possible implementation of a method for spillage detection/prevention for a movement. The sample container 5 is moved by the sample container transport system 1, e.g. in that it is gripped by the gripping apparatus 3 which is moved by the robotic movement apparatus 2. During movement, the force/torque profile of the movement is evaluated, e.g. by the signal-processing unit 6, using the multidimensional-force signal detected by the multidimensional-force sensor 4. If the sample liquid in the sample container 5 for some reason sloshes unusually strong, which could possibly lead to a spillage, the sample container transport system 1, e.g. the signal-processing unit 6, detects an anomaly in the force/torque profile so that a respective pre-defined condition is satisfied, or in other words: that a certain force-event has occurred. In reaction thereto, the sample container transport system 1 performs an action: e.g. based on the available information (e.g. the severity of deviation of the unusual force/torque profile from the usual force/torque profile), the sample container transport system 1 decides that either spillage prevention is likely possible and adapts the movement of the sample container 5 accordingly (e.g. by slowing the movement) or that spillage prevention is unlikely possible and stops the movement of the sample container 5. In either case, the sample container transport system 1 further determines if there is a difference in the force in the vertical z-direction after the force-event as compared to before the force-event; because the force in the z-direction is indicative of a weight, a difference could indicate that a spillage has occurred. If such a difference is detected, the movement is stopped and a warning is issued so that a user can check the incident. In addition, the force-event can be logged so that information thereon can later be used.

According to some embodiments, the method comprises the following step: determining if a force in a (i.e. at least one) direction after an event (i.e. the satisfaction of a pre-defined condition) is different from a force in this direction before the event. Different here can e.g. mean being larger or lower by e.g. 5% or more and/or a mean average being larger or lower by e.g. 1% or more. The comparison can comprise smoothening, filtering, and/or averaging the data, e.g. for reducing the influence of noise.

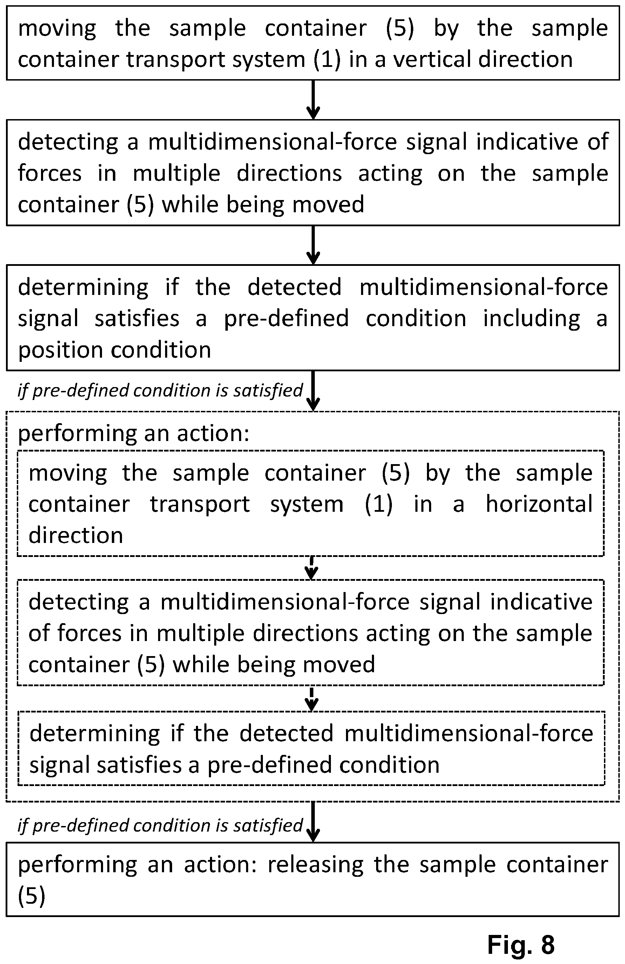

**Fig. 8** shows a flowchart of a possible implementation of a method for rack detection. The sample container 5 is moved to a suitable x/y-coordinate, i.e. above an assumed rack position, and then moved downwards (opposite to the z-direction indicated in the Figs. 1-4). During this vertical movement, an increase of the force *f_{z}* in the z-direction (i.e. upwards) is detected, e.g. by the signal-processing unit 6, using the multidimensional-force signal detected by the multidimensional-force sensor 4. In this case, the pre-defined condition comprises a position condition, namely that at this x/y/z-coordinate (resp. a small variation thereof) a pre-defined increase of *f_{z}* indicates that the sample container 5 was placed in a rack. The detected increase of *f_{z}* is compared to the pre-defined increase of *f_{z}* and upon verification that the detected *f_{z}* satisfies the pre-defined condition, the sample container transport system 1 performs the action of releasing the sample container 5, e.g. by opening a gripping element 32 of the gripping apparatus 3.

According to some embodiments, the pre-defined condition depends on a force in a non-vertical direction, e.g. a force in a horizontal direction and/or a rotation force. Such forces can e.g. be indicative of friction between a sample container and the rack (e.g. a wall of a rack position in the rack) and the pre-defined condition can e.g. comprise that certain forces in a non-vertical direction occur in a context of an occurrence of an increase of *f_{z}.*

The sample container transport system 1 can be configured for performing further actions prior to releasing in order to verify that the sample container 5 has indeed been placed into a rack. As indicated in the dashed boxes of Fig. 8, the sample container transport system 1 can e.g. try moving the sample container 5 in a horizontal direction (in the *x*/*y*-plane), detect respective translation and rotation forces *fₓ, f_{y}, tₓ, t_{y}* from the multidimensional-force signal, and determine if these forces match a certain pattern that is expected when the sample container 5 is moved horizontally within a rack. For example, where the sample container 5 is moved in the *x*-direction within a rack, a characteristic increase in *fₓ* and/or *tₓ* can be detected.

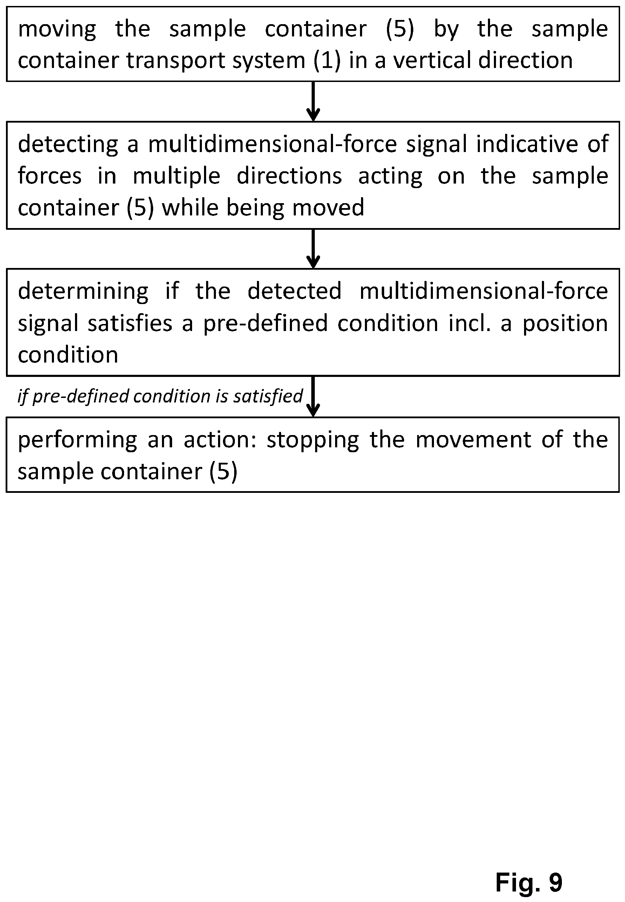

**Fig. 9** shows a flowchart of a possible implementation of a method for collision detection, in this case for determining if the moved sample container 5 during vertical movement into a rack collides with another sample container 5 already placed in that rack. Similar to the method of Fig. 8, the sample container 5 is moved downwards and an increase of the force *f_{z}* in the z-direction (i.e. upwards) is detected. However, in contrast to the method of Fig. 8, the position at which this increase of *f_{z}* is detected is not where a rack is expected. Instead, a condition is defined that at this position such an increase in *f_{z}* indicates a possible collision with another sample container 5 already placed in that rack. If this condition is satisfied, the sample container transport system 1 assumes a mistake and stops the movement of the sample container 5 to prevent further problems. Further actions can e.g. comprise issuing a warning signal and/or logging data related to this event.

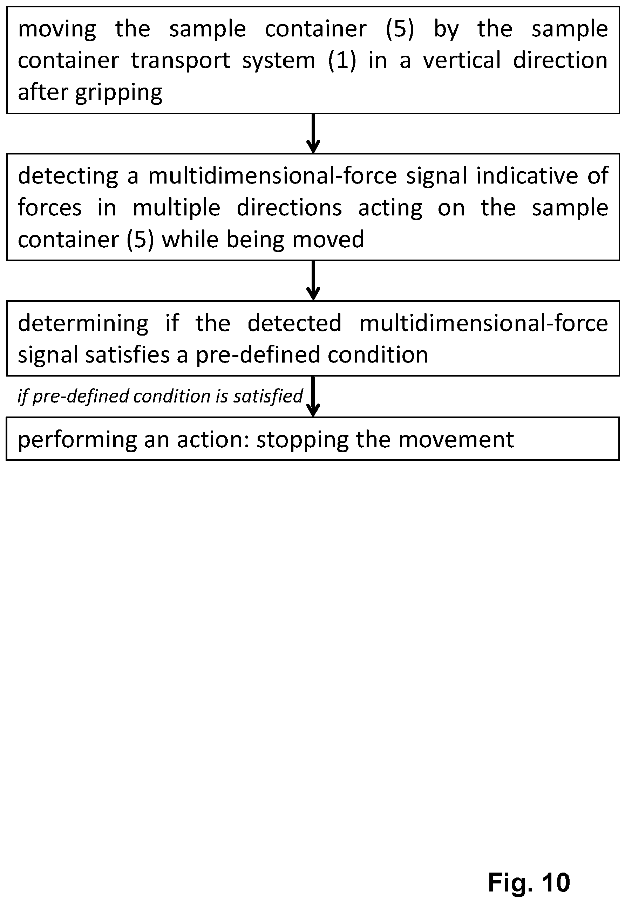

**Fig. 10** shows a flowchart of a possible implementation of a method for sample container gripping confirmation, i.e. confirming that a sample container 5 has been gripped by the gripping apparatus 3. In this example, the gripping apparatus 3 is moved to a position at which the sample container transport system 1 expects a sample container 5 and a gripping action is performed at this position as if a sample container 5 is to be gripped. Then, the gripping apparatus 3 is moved upwards and the multidimensional-force signal indicative of forces in multiple directions is detected. Once lifted, a sample container 5 comprising a sample fluid should give rise to an increase in force *f_{z}* in the vertical direction, based on which a respective condition is defined, e.g. that after a gripping and while moving upwards, *f_{z}* is smaller than a certain value, e.g. smaller than *0.5 Newton.* If that condition is satisfied, the sample container transport system 1 assumes a mistake and e.g. stops the movement. Further actions can e.g. comprise issuing a warning signal and/or logging data related to this event.

The pre-defined conditions can e.g. be defined based on profiles of a multidimensional force signal of earlier (e.g. test) runs using the same sample container transport system 1 and/or a sample container transport system 1 identical or similar in construction.

According to some embodiments, the method comprises the steps of:
- moving a reference sample container 5 (e.g. by gripping the reference sample container 5 using the gripping apparatus 3 and by moving the gripping apparatus 3);
- detecting and recording a profile of a multidimensional force signal indicative of forces in multiple directions that act on the reference sample container 5 while being moved and/or parameters derived therefrom; and
- defining a condition for a detected multidimensional-force signal using (e.g. based on) the recorded profile, the condition thereby becoming a pre-defined condition.
The profile can e.g. be a profile of the raw force sensor data and/or of processed data, e.g. a smoothed profile and/or a profile transformed by using e.g. calibration data. Such a training part of the method can be performed prior to processing of actual samples and/or during processing of actual samples in course of the normal operation in the IVD laboratory; in the latter scenario, the sample containers comprising actual samples play the role of the mentioned reference sample container.

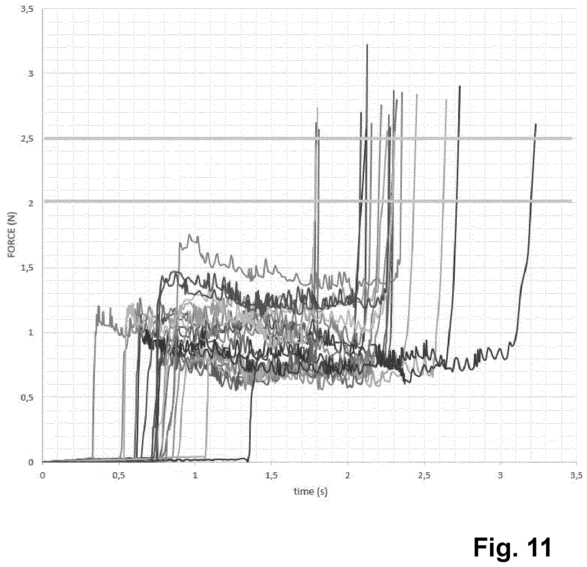

In the diagram shown in **Fig. 11****,** multiple profiles of forces in a certain direction, measured in *Newton (N),* are plotted as a function of time, measured in *seconds (s).* Each of the profiles show a case where a reference sample container 5 was moved and then collided with another object. In each case, the forces detected during normal movement were between *0.5 Newton* and *1.8 Newton,* and after the collision, the forces in each case exceed 2 *Newton.* Based on this series of profiles, a condition can be defined, e.g. that the force in a certain direction is larger than 2 *Newton,* and a respective action can be defined, e.g. stopping the movement if that condition is satisfied. As can be seen in Fig. 11, in each case the force actually exceeds 2.5 *Newton.* While at first a threshold of 2 *Newton* can be defined, it is possible to later adjust this threshold to e.g. *2.5 Newton,* e.g. if log data shows that force-events between 2 *Newton* and *2.5 Newton* in all cases did not lead to problematic incidents, e.g. no spillage occurred.

Another condition can be defined based on the data of Fig. 11 using the variation of the force signal: As can be seen from Fig. 11, the force signal during normal movement only varies in a limited manner, and only after the collision, the force signal increases excessively. A possible condition could e.g. be a difference in the force signal of more than *0.4 Newton* within a *0.02-second* window.

The proposed methods can allow for indicating possible problems independent of the actual type of the sample container, e.g. where the condition depends on a relative variation of the multidimensional-force signal during movement.

A condition can be defined by using an artificial intelligence using recorded profiles, e.g. wherein the recorded profiles and the information whether or not problems occurred during the respective movements are used as training data for the artificial intelligence.

According to some specific embodiments, the method comprises that
- the step of
   ∘ detecting and recording a profile of a multidimensional force signal indicative of forces in multiple directions that act on the reference sample container 5 while being moved;
      comprises
   ∘ detecting and recording the position signal (e.g. as part of the profile); and
- the step of
   ∘ defining a condition for a detected multidimensional-force signal using the recorded profile, the condition thereby becoming a pre-defined condition
      comprises
   ∘ defining a position condition of the pre-defined condition (e.g. by using the profile and/or other information).

Further proposed are a sample container transport system 1, a laboratory analyzer, a laboratory system, and an IVD laboratory that are designed and/or configured for performing any of the proposed methods. The proposed methods can (at least partially) be implemented as computer-implemented methods e.g. to be performed by a signal-processing unit 6 of the sample container transport system 1.

Further proposed are methods embodied by any of the proposed sample container transport systems 1.

The following specific proposals are proposed:
Proposal 1: A sample container transport system 1 for moving sample containers in an IVD laboratory system comprising
   - a gripping apparatus 3 for gripping sample containers 5, and
   - a robotic movement apparatus 2 for moving the gripping apparatus 3 in multiple directions,
      characterized in that the sample container transport system 1 comprises
   - a multidimensional-force sensor 4 that is designed for detecting a multidimensional-force signal indicative of forces in multiple directions acting on a sample container 5 gripped by the gripping apparatus 3.
Proposal 2: The sample container transport system 1 according to the preceding proposal, wherein
   - the gripping apparatus 3 comprises a gripping element 32, wherein the gripping apparatus 3 is designed so that the gripping element 32 is in direct contact with the sample container 5 if the sample container 5 is gripped by the gripping apparatus 3;
   - the multidimensional-force sensor 4 is operatively coupled to the gripping element 32.
Proposal 3: The sample container transport system 1 according to one of the preceding proposals, wherein the multidimensional-force sensor 4 is designed for detecting a multidimensional-force signal indicative of forces in multiple directions comprising at least three translation dimensions.
Proposal 4: The sample container transport system 1 according to one of the preceding proposals, wherein the multidimensional-force sensor 4 is designed for detecting a multidimensional-force signal indicative of forces in multiple directions comprising three translation and three rotation dimensions.
Proposal 5: The sample container transport system 1 according to one of the preceding proposals, wherein the robotic movement apparatus 2 is a Cartesian robot wherein translation movement is composed of movement along multiple axes that are orthogonally to each other.
Proposal 6: The sample container transport system 1 according to one of the preceding proposals, wherein the robotic movement apparatus 2 is designed for moving the gripping apparatus 3 in multiple directions in at least three translation dimensions.
Proposal 7: The sample container transport system 1 according to one of the preceding proposals, wherein the robotic movement apparatus 2 is designed for moving the gripping apparatus 3 in multiple directions in at least one rotation and three translation dimensions.
Proposal 8: The sample container transport system 1 according to one of the preceding proposals, wherein the multidimensional-force sensor 4 is arranged at an intersection of the robotic movement apparatus 2 and the gripping apparatus 3.
Proposal 9: The sample container transport system 1 according to one of proposals 1 to 7, wherein the multidimensional-force sensor 4 is comprised in the gripping apparatus 3.
Proposal 10: The sample container transport system 1 according to one of proposals 1 to 7, wherein the multidimensional-force sensor 4 is comprised in the robotic movement apparatus 2.
Proposal 11: The sample container transport system 1 according to one of the preceding proposals, wherein the container processing system 1 comprises
   - a signal-processing unit 6 configured for processing the multidimensional-force signal.
Proposal 12: The sample container transport system 1 according of the preceding proposals, wherein the signal-processing unit 6 is configured for determining if a detected multidimensional-force signal satisfies a pre-defined condition.
Proposal 13: The sample container transport system 1 according to one of the preceding proposals, wherein the sample container transport system 1 comprises
   - an artificial intelligence unit 60 for determining if the detected multidimensional-force signal satisfies a pre-defined condition.
Proposal 14: The sample container transport system 1 according to one of the preceding proposals, wherein the sample container transport system 1 comprises
   - a position sensor 40 that is designed for detecting a position signal that is indicative of a position of the gripping apparatus 3 and/or of a sample container 5 gripped by the gripping apparatus 3.
Proposal 15: The sample container transport system 1 according to one of proposals 11 to 13 and according to proposal 14, wherein the signal-processing unit 6 is further configured for processing the position signal.
Proposal 16: A method for using a sample container transport system 1 according to one of the preceding proposals for moving a sample container 5, the method comprising the following steps:
   - moving the sample container 5
      ∘ by gripping the sample container 5 using the gripping apparatus 3 and
      ∘ by moving the gripping apparatus 3;
   - detecting a multidimensional-force signal indicative of forces in multiple directions acting on the sample container 5 while being moved; and
   - determining if the detected multidimensional-force signal satisfies a pre-defined condition.
Proposal 17: The method according to the preceding proposal, wherein the pre-defined condition comprises that
   - a one-dimensional parameter of the multidimensional-force signal exceeds a pre-defined threshold.
Proposal 18: The method according to the preceding proposal, wherein the one-dimensional parameter is a force signal in one direction.
Proposal 19: The method according to proposal 17, wherein the one-dimensional parameter is a combination of force signals in two or more directions.
Proposal 20: The method according to one of proposals 16 to 19, wherein the pre-defined condition comprises that
   - the detected multidimensional-force signal profile deviates from a pre-defined multidimensional-force signal pattern.
Proposal 21: The method according to the preceding proposal, wherein
   - the pre-defined multidimensional-force signal pattern is derived from recordings of multidimensional-force signals profiles of moving a sample container 5.
Proposal 22: The method according to one of proposals 16 to 21, wherein the step of
   - determining if the detected multidimensional-force signal satisfies a pre-defined condition
   comprises using an artificial intelligence.
Proposal 23: The method according to the preceding proposal, wherein the training of the artificial intelligence comprises using of recordings of multidimensional-force signal profiles of moving one or more sample containers 5.
Proposal 24: The method according to one of proposals 16 to 23, wherein
   - the multidimensional-force signal comprises a position signal indicative of a position of the gripping apparatus 3 and/or of a sample container 5 gripped by the gripping apparatus 3 at which the multidimensional force signal was detected;
   - the pre-defined condition comprises a position condition;
   - the step of
      ∘ detecting a multidimensional-force signal indicative of forces in multiple directions acting on the sample container 5 while being moved
         comprises
      ∘ detecting the position signal; and
   - the step of
      ∘ determining if the detected multidimensional-force signal satisfies pre-defined condition
         comprises
      ∘ determining if the detected position signal satisfies the position condition.
Proposal 25: The method according to one of proposals 16 to 24, wherein the pre-defined condition depends on a translation force in a non-vertical direction, e.g. a force in a horizontal direction, and/or on a rotation force.
Proposal 26: The method according to one of proposals 16 to 25, wherein the method further comprises the step of
   - performing a pre-defined action if it is determined that the detected force signal satisfies the pre-defined condition.
Proposal 27: The method according to the preceding proposal, wherein the pre-defined action comprises
   - logging the event.
Proposal 28: The method according to one of proposals 26 to 27, wherein the pre-defined action comprises
   - issuing a warning signal.
Proposal 29: The method according to one of proposals 26 to 28, wherein the pre-defined action comprises
   - adjusting the moving of the sample container 5.
Proposal 30: The method according to the preceding proposal, wherein adjusting the moving of the sample container 5 comprises
   - slowing the moving of the sample container 5.
Proposal 31: The method according to one of proposals 26 to 28, wherein the pre-defined action comprises
   - stopping the moving of the sample container 5.
Proposal 32: The method according to one of proposals 26 to 28, wherein the pre-defined action comprises
   - releasing the sample container 5 from the gripping apparatus 3.
Proposal 33: The method according to one of proposals 26 to 32, wherein the pre-defined action comprises
   - checking for contamination in an area in which the sample container 5 was moved.
Proposal 34: The method according to one of proposals 26 to 33, wherein the pre-defined action comprises
   - cleaning an area in which the sample container 5 was moved.
Proposal 35: The method according to one of proposals 16 to 34, wherein the method comprises the steps of:
   - moving a reference sample container 5
      ∘ by gripping the reference sample container 5 using the gripping apparatus 3 and
      ∘ by moving the gripping apparatus 3;
   - detecting and recording a profile of a multidimensional force signal indicative of forces in multiple directions that act on the reference sample container 5 while being moved and/or parameters derived therefrom; and
   - defining a condition for a detected multidimensional-force signal using the recorded profile, the condition thereby becoming a pre-defined condition.
Proposal 36: The method according to proposal 24 and proposal 35 wherein
   - the step of
      ∘ detecting and recording a profile of a multidimensional force signal indicative of forces in multiple directions that act on the reference sample container 5 while being moved;
         comprises
      ∘ detecting and recording the position signal; and
   - the step of
      ∘ defining a condition for a detected multidimensional-force signal using the recorded profile, the condition thereby becoming a pre-defined condition
         comprises
      ∘ defining a position condition of the pre-defined condition.

**REFERENCE LIST**

| | | | |
|---|---|---|---|
| 1 | sample container transport system | 30 | gripper body |
| | | 32 | gripping element |
| 2 | robotic movement apparatus | 4 | multidimensional-force sensor |
| 20 | rail in x-direction | 40 | position sensor |
| 21 | rail in y-direction | 5 | sample container |
| 22 | beam in z-direction | 6 | signal-processing unit |
| 3 | gripping apparatus | 60 | artificial intelligence unit |

## Claims

1. A sample container transport system (1) for moving sample containers in an IVD laboratory system comprising
- a gripping apparatus (3) for gripping sample containers (5), and
- a robotic movement apparatus (2) for moving the gripping apparatus (3) in multiple directions,
**characterized in that** the sample container transport system (1) comprises
- a multidimensional-force sensor (4) that is designed for detecting a multidimensional-force signal indicative of forces in multiple directions acting on a sample container (5) gripped by the gripping apparatus (3).

2. The sample container transport system (1) according to the preceding claim, **characterized in that** the multidimensional-force sensor (4) is designed for detecting a multidimensional-force signal indicative of forces in multiple directions comprising three translation and three rotation dimensions.

3. The sample container transport system (1) according to one of the preceding claims, **characterized in that** the multidimensional-force sensor (4) is arranged at an intersection of the robotic movement apparatus (2) and the gripping apparatus (3).

4. The sample container transport system (1) according to one of the preceding claims, **characterized in that** the container processing system (1) comprises
- a signal-processing unit (6) configured for processing the multidimensional-force signal, wherein the signal-processing unit (6) is configured for determining if a detected multidimensional-force signal satisfies a pre-defined condition.

5. The sample container transport system (1) according to one of the preceding claims, **characterized in that** the sample container transport system (1) comprises
- an artificial intelligence unit (60) for determining if the detected multidimensional-force signal satisfies a pre-defined condition.

6. The sample container transport system (1) according to one of the preceding claims, **characterized in that** the sample container transport system (1) comprises
- a position sensor (40) that is designed for detecting a position signal that is indicative of a position of the gripping apparatus (3) and/or of a sample container (5) gripped by the gripping apparatus (3).

7. A method for using a sample container transport system (1) according to one of the preceding claims for moving a sample container (5), the method comprising the following steps:
- moving the sample container (5)
∘ by gripping the sample container (5) using the gripping apparatus (3) and
∘ by moving the gripping apparatus (3);
- detecting a multidimensional-force signal indicative of forces in multiple directions acting on the sample container (5) while being moved; and
- determining if the detected multidimensional-force signal satisfies a pre-defined condition.

8. The method according to the preceding claim, **characterized in that** the pre-defined condition comprises that
- a one-dimensional parameter of the multidimensional-force signal exceeds a pre-defined threshold.

9. The method according to claim 8, **characterized in that** the one-dimensional parameter is a combination of force signals in two or more directions.

10. The method according to one of claims 7 to 9, **characterized in that** the step of
- determining if the detected multidimensional-force signal satisfies a pre-defined condition
comprises using an artificial intelligence.

11. The method according to one of claims 7 to 10, **characterized in that**
- the multidimensional-force signal comprises a position signal indicative of a position of the gripping apparatus (3) and/or of a sample container (5) gripped by the gripping apparatus (3) at which the multidimensional force signal was detected;
- the pre-defined condition comprises a position condition;
- the step of
∘ detecting a multidimensional-force signal indicative of forces in multiple directions acting on the sample container (5) while being moved
comprises
∘ detecting the position signal; and
- the step of
∘ determining if the detected multidimensional-force signal satisfies pre-defined condition
comprises
∘ determining if the detected position signal satisfies the position condition.

12. The method according to one of claims 7 to 11, **characterized in that** the pre-defined condition depends on a translation force in a non-vertical direction and/or on a rotation force.

13. The method according to one of claims 7 to 12, **characterized in that** the method further comprises the step of
- performing a pre-defined action if it is determined that the detected force signal satisfies the pre-defined condition.

14. The method according to one of claims 7 to 13, **characterized in that** the method comprises the steps of:
- moving a reference sample container (5)
∘ by gripping the reference sample container (5) using the gripping apparatus (3) and
∘ by moving the gripping apparatus (3);
- detecting and recording a profile of a multidimensional force signal indicative of forces in multiple directions that act on the reference sample container (5) while being moved and/or parameters derived therefrom; and
- defining a condition for a detected multidimensional-force signal using the recorded profile, the condition thereby becoming a pre-defined condition.

15. The method according to claim 11 and according to claim 14, **characterized in that**
- the step of
∘ detecting and recording a profile of a multidimensional force signal indicative of forces in multiple directions that act on the reference sample container (5) while being moved;
comprises
∘ detecting and recording the position signal; and
- the step of
∘ defining a condition for a detected multidimensional-force signal using the recorded profile, the condition thereby becoming a pre-defined condition
comprises
∘ defining a position condition of the pre-defined condition.
